(19)

Europäisches
Patentamt
European
Patent Office
Office européen
des brevets

(11)    **EP 2 802 455 B1**

(12)    **EUROPEAN PATENT SPECIFICATION**

(45) Date of publication and mention
of the grant of the patent:
**27.04.2016  Bulletin 2016/17**

(51) Int Cl.:
**B41F 23/00** *(2006.01)*     **H01T 19/00** *(2006.01)*
**B29C 59/10** *(2006.01)*

(21) Application number: **13700552.6**

(86) International application number:
**PCT/EP2013/050483**

(22) Date of filing: **11.01.2013**

(87) International publication number:
**WO 2013/104753 (18.07.2013 Gazette 2013/29)**

(54) **CORONA TREATMENT DEVICE**

VORRICHTUNG ZUR BEHANDLUNG DER KORONA

DISPOSITIF DE TRAITEMENT À EFFET COURONNE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **13.01.2012  EP 12151049**

(43) Date of publication of application:
**19.11.2014  Bulletin 2014/47**

(73) Proprietor: **OCE-Technologies B.V.**
**5914 CA Venlo (NL)**

(72) Inventor: **KUYPERS, Herman**
**NL-5941 JH Velden (NL)**

(56) References cited:
**EP-A1- 0 318 284      DE-A1- 10 050 301
US-A1- 2004 003 475**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the Invention**

The present invention relates to a corona treatment device for treating a cut sheet material. The present invention further relates to a printing system comprising the corona treatment device for treating a cut sheet material.

**Background of the Invention**

In order to control the quality of the corona treatment for chemically modifying a material it is important to maintain the material at a predetermined distance during the corona treatment.

It is commonly known to keep a web feed sheet material at a predetermined distance of a corona unit by positioning the corona unit at a certain distance of a web transport path, whereby the distance of the web feed sheet material is maintained at the predetermined distance during transport of the web along the corona unit by stretching the web at both sides of the web transport path.

A disadvantage of the web transport mechanism is that it is not able to controllably transport a cut sheet material along the corona unit. During transport along the corona unit the leading edge and trailing edge of the cut sheet material can not be controlled all the time and therefore the distance of the cut sheet material to the corona unit may vary during transport along the corona unit. As a result the quality of the corona treatment of the surface of the cut sheet material is not controlled. Another disadvantage is that in case the thickness of the cut sheet varies, the transport path of the cut sheet material needs to be adjusted. Another disadvantage is that the cut sheet material may get damaged or stuck by hitting the corona unit during transport along the corona unit.

In US20040003475 a sheet and web cleaner is disclosed having a pressurized air ionizing bar, which discharges ionized air at high velocity onto a moving sheet or web. The sheet or web is transported along a path along elongated air discharge openings. The treatment by the discharge ionized air provides a charge to the sheet or web for neutralizing the static electricity on both the sheet or web material being processed.

In EP0318284 a corona discharge device is disclosed including an electrically conductive shield case and a corona wire. The wire applies a corona discharge to the back surface of a sheet material. A guide member is provided for preventing entry of a sheet material in the shield case. The corona discharge device provides a charge to the sheet material for transferring a toner image on a rotating drum to a sheet material or for peeling the sheet material when in intimate contact with the surface of the rotating drum.

A disadvantage of the known devices is that the treatment is not able to chemically modify the surface of a cut sheet material.

In DE 10232255 a rotary printing machine is disclosed comprising a corona treatment device for treating a sheet, the corona treatment device comprising a cylinder and a corona electrode, wherein the cylinder is arranged as a counter electrode. The corona electrode is arranged facing the cylinder for forming a corona gap in between one another. The corona treatment device is arranged for treating the sheet to enhance adhesion of print material to the sheet.

**Summary of the Invention**

It is accordingly an object of the present invention to provide a corona treatment device for controllably treating a cut sheet material in order to chemically modify the surface of the cut sheet material.

This object is attained by a corona treatment device for treating a cut sheet material, the corona treatment device comprising a corona means for applying a corona treatment onto a surface of a sheet, the corona means comprising a corona electrode, a sheet transporting means for transporting the sheet in the direction of a transport path along the corona means and a plurality of sheet guide elements for guiding the sheet along the corona means, the plurality of sheet guide elements being positioned between the corona electrode and the transport path thereby providing a predetermined distance between the transport path and the corona electrode, wherein the plurality of sheet guide elements comprises at least a first sheet guide element extending in a direction at a first angle with respect to the sheet transport direction, wherein the plurality of sheet guide elements comprises at least a first sheet guide element extending in a direction at a first angle in a plane of the sheet transport direction with respect to the sheet transport direction, and wherein the first angle in said plane of the sheet transport direction of the sheet guide element together with a width of the sheet guide element Wguid defines which part of a treatment length of the corona means $L_{corona}$ in the sheet transport direction is covered by the sheet guide element in said plane of the sheet transport direction and wherein at most 20% of the treatment length of the corona means $L_{corona}$ is covered.

The corona treatment device comprises a corona means for applying a corona plasma treatment onto a surface of a sheet, the corona means comprising a corona electrode and a counter electrode in close proximity of each other, a sheet transporting means for transporting the cut sheet material in the direction of a transport path, the transport path of the cut sheet material being positioned through the corona means and in between the corona electrode and the counter electrode, and a plurality of sheet guide elements for guiding the sheet along the corona electrode, the plurality of sheet guide elements being positioned between the corona electrode and the transport path thereby providing a predetermined distance between the transport path and the corona electrode, wherein the plurality of sheet guide elements comprises at least a first sheet guide element extending in a direction at a first angle with respect to the sheet transport direction.

The corona treatment device comprises a corona means. The corona means comprises a corona electrode and a counter electrode. In operation the cut sheet material is transported through the transport path along the corona electrode in between the corona electrode and the counter electrode. The corona means provides a plasma in between the corona electrode and the counter electrode. The plasma according to the invention is provided in the direction of the surface of the sheet, which is transported along the transport path in between the corona electrode and the counter electrode. The corona electrode and the counter electrode are preferably arranged substantially parallel to each other at both sides of the transport path in order to provide a uniform plasma in a high voltage alternating electrical field.

As used herein the plasma which is formed in between the corona electrode and the counter electrode is provided in order to chemically modify the surface of the cut sheet material. It is known that materials such as plastics, cloth, or paper may be passed through the plasma in order to change the surface energy of the material as is known from, for example, FR2578176 and GB925354.

According to the invention the plasma may chemically modify the surface energy of the cut sheet material when it is controllably passed in between the corona electrode and the counter electrode in order to adapt interaction of the surface of the cut sheet material to ink droplets by providing a plurality of sheet guide elements according to the present invention. The plasma may modify the surface energy of the cut sheet material thereby reducing inter color bleed between adjacent ink droplets or increasing ink droplet spreading of each individual ink droplet. As used herein the plasma is formed and provided directly to the surface of the cut sheet by providing a high voltage alternating electrical field between the corona electrode and the counter electrode during the transport of the cut sheet through the transport path.

The corona electrode may be a ceramic bar, a discharge electrode, a curved electrode, or any other corona discharge elements. The corona means may also comprise a plurality of corona electrodes.

The counter electrode is preferably electrically grounded. The counter electrode is arranged at the other side of the transport path opposite of the corona electrode. As a result the corona means may provide a corona plasma treatment to the surface of the cut sheet in the transport path between the corona electrode and the counter electrode. The counter electrode may have a flat surface and may also have a curved surface. The surface of the counter electrode preferably has a lower curvature than the surface of the corona electrode. The counter electrode may have a bare electrical conducting surface and the counter electrode may comprise a dielectric surface layer. In an embodiment a dielectric sheet supporting surface may be arranged in between the counter electrode and the transport path for supporting the cut sheet material during transport through the transport path.

In an embodiment the sheet transporting means is configured for transporting the sheet in the direction of a transport path along the corona electrode. The transport path is positioned in between the corona electrode and the counter electrode. The sheet transporting means may push the sheet in the direction of a transport path and/or may pull the sheet in the direction of a transport path. The sheet transporting means may comprise a sheet input pinch roller for pushing the sheet near the inlet position of the transport path. The transport path has a height in between the sheet guide elements and a supporting surface at the side of the counter electrode. The supporting surface of the cut sheet material during transport through the transport path may be the outer surface of the counter electrode. The height of the transport path is preferably in the range of 1 to 3 mm, more preferably in the range of 1 to 1.5 mm. In case the height becomes larger than 3 mm, the plasma treatment of the cut sheet material becomes less uniform, as the cut sheet material may freely move in the transport path in the height direction during transport along the corona electrode. In case the height is much lower than 1 mm, the cut sheet material may become obstructed during transport between the sheet guide elements and the counter electrode. The minimum height of the transport path is at least the same as the thickness of the cut sheet material in order to accommodate the transported cut sheet material.

The plurality of sheet guide elements guide the sheet through the transport path along the corona electrode. The plurality of sheet guide elements is positioned between the corona electrode and the transport path thereby providing a predetermined distance between the transport path and the corona electrode. As a result the guided sheet is kept at a predetermined distance from the corona electrode, which distance is suitable for providing a uniform plasma treatment onto the surface of the cut sheet material. The predetermined distance is a relatively short distance in order to provide a sufficient plasma treatment effect due to the corona means.

In an embodiment the predetermined distance is in the range of 1 to 3 mm, more preferably in the range of 1 mm to 1.5 mm, in particular the predetermined distance is about 1.25 mm. In the range of the predetermined distance the intensity and uniformity of the corona plasma is sufficient to uniformly modify the surface of the cut sheet material. Each of the plurality of sheet guide elements may be arranged between the corona electrode and the transport path thereby partly extending over a treatment length of the corona electrode in the transport direction of the sheet and may be arranged completely extending over a treatment length of the corona electrode in the transport direction of the sheet. In case the sheet guide element completely extends over the treatment length of the corona electrode, the guidance of the cut sheet material through the transport path is enhanced.

In an embodiment of the corona treatment device, each of the plurality of sheet guide elements comprises a ceramic material. The ceramic material is sufficiently inert (chemically stable) towards the plasma and does not degrade the plasma which has been formed by the corona means. The ceramic material as used herein is an electrical insulating material. In case the sheet guide element has an electrical conductive surface material, such as steel or aluminum, the sheet guide element degrades the uniformity of the corona plasma. The ceramic material supports the durability of the plurality of sheet guide elements, thereby maintaining the predetermined distance during life time, while enhancing the corona plasma treatment process. Each of the plurality of sheet guide elements may comprise a ceramic surface layer. Alternatively each of the plurality of sheet guide elements may be constituted by the ceramic material. The ceramic material may be for example aluminium oxide ($Al_2O_3$), silicon nitride ($Si_3N_4$) or silicon carbide (SiC).

In an embodiment of the corona treatment device, the plurality of sheet guide elements comprises at least a first sheet guide element extending in a direction at a first angle in a plane of the transport path with respect to the sheet transport direction, wherein the angle of the sheet guide element together with a width of the sheet guide element $W_{guid}$ defines which part of a corona plasma treatment length $L_{corona}$ of the corona means is covered by the sheet guide element in the sheet transport direction and wherein at most 20% of the corona plasma treatment length $L_{corona}$ of the corona means is covered.

The plurality of sheet guide elements comprises at least a first sheet guide element extending in a direction, the extending direction being arranged at a first angle with respect to the sheet transport direction. In an embodiment the at least a first sheet guide element may be a subset comprising two or more sheet guide elements. Preferably the angle of the at least a first sheet guide element with respect to the sheet transport direction is at least larger than zero. The angle of the at least a first sheet guide element is the angle in a plane parallel to the transport path. The transport path of the sheet may be substantially perpendicular to the corona discharge direction.

In case the angle is zero, and the sheet guide element extends over the whole corona plasma treatment length of the corona means, parts of the surface of the sheet are shielded from the corona means by the guide elements all the time during transport of the sheet along the corona unit and these parts of the sheet will not be treated by the plasma.

The first angle of the at least a first sheet guide element is selected such that in operation on the whole surface of the sheet the corona treatment is applied. In case the corona means have a certain effective corona plasma treatment length $L_{corona}$ and the sheet guide element has a certain width $W_{guid}$, the angle of the at least a first sheet guide element is selected, such that the sheet is plasma treated by the corona means over a sufficient long distance and / or time.

In an embodiment of the corona treatment device, the angle of the sheet guide element together with a width of the sheet guide element $W_{guid}$ defines which part of a treatment length of the corona means $L_{corona}$ is covered by the sheet guide element in the sheet transport direction and wherein at most 20% of the treatment length of the corona means $L_{corona}$ is covered.

As a result the angle is suitably selected such that at most 20% for a certain position of the surface of the cut sheet is covered by the sheet guide element during transport in the sheet transport direction over the corona plasma treatment length $L_{corona}$ and that at least 80% of the corona means length is effectively used in treating said position of the surface. Thus, in case the width $W_{guid}$ of the sheet guide element increases, or the corona plasma treatment length $L_{corona}$ of the corona means decreases, the angle may be increased to ensure a sufficient surface treatment.

The corona plasma treatment length for one corona electrode is typically the same as the dimension of the corona electrode in the direction of the sheet transport.

Alternatively in case the discharge process from the corona electrode provides a certain discharging plasma treatment widening, the corona plasma treatment length is also widened. As a result the corona plasma treatment length is longer than the dimension of the corona electrode in the direction of the sheet transport.

The corona plasma treatment length of a corona means which comprises a plurality of corona electrodes is the sum of the respective corona plasma treatment lengths of each of the plurality of corona electrodes.

In an embodiment the width of the sheet guide element $W_{guid}$ is in the range 0.3 mm to 1 mm and the treatment length of the corona means is at least 10 mm. The range of the width of the sheet guide element and the corona plasma treatment length is selected to balance mechanical stiffness of the sheet guide element and the quality of surface treatment by the corona means.

In an embodiment of the corona treatment device, the plurality of sheet guide elements is arranged at an angle with respect to the sheet transport direction, the angle being larger than 2 degrees and smaller than 43 degrees. The angle of the plurality of sheet guide elements with respect to the sheet transport direction is the angle in a plane parallel to the plane of the transported sheet. This angle further enhances sheet transport by providing that side edges of a sheet will not be obstructed during transport along the corona unit.

In an embodiment the angle is larger than 5 degrees. This angle provides the advantage that sheet guide elements having a width of at least 0.3 mm may be employed extending over the full corona plasma treatment length

$L_{corona}$ while maintaining a sufficient quality in corona plasma treatment of the surface of the sheet.

In an embodiment the angle is larger than 5 degrees and smaller than 43 degrees.

In an embodiment the angle is smaller than 35 degrees. This provides the advantage that the plurality of sheet guide elements may be arranged at a relatively short distance from each other while extending over the full corona plasma treatment length $L_{corona}$, for example at a distance of about 10 mm. The advantage is that the cut sheet material is easily maintained at the predetermined distance during transport along the corona means. As a result the quality of corona plasma treatment of the whole surface of the sheet is substantially uniform. In case the angle becomes larger than 35 degrees, the corona plasma treatment of a portion of the surface of the sheet is obstructed by at least two of the plurality of sheet guide elements for a corona plasma treatment length of 15 mm or longer. As a result the uniformity of surface treatment will be reduced.

In an embodiment the angle is larger than 5 degrees and smaller than 35 degrees.

In an embodiment the angle is smaller than 20 degrees. In this embodiment the corona plasma treatment may be provided over a longer corona plasma treatment length, e.g. over at least 30 mm corona length, while arranging the plurality of sheet guide elements extending over the full corona plasma treatment length $L_{corona}$ at a relatively short distance between each of the plurality of sheet guide elements, for example at a distance of about 10 mm. This embodiment provides the advantage that the quality and/or level of the corona plasma treatment of the surface of the cut sheet is improved by using a longer treatment path, while maintaining proper guiding of the cut sheet along the corona means, especially for cut sheet materials which are more flexible.

In this embodiment the corona means may comprise two commercially available corona electrodes being arranged next to each other in the sheet transport direction. The corona means comprising two corona electrodes have a longer corona plasma treatment length than a corresponding single corona electrode. In case the angle becomes larger than 20 degrees, the corona plasma treatment of a portion of the surface of the sheet is obstructed by at least two of the plurality of sheet guide elements during treatment, thereby reducing the treatment level of the surface of the cut sheet.

In an embodiment the angle is larger than 5 degrees and smaller than 20 degrees.

In an embodiment of the corona treatment device, the plurality of sheet guide elements comprises a second sheet guide element extending in a direction at a second angle with respect to the sheet transport direction, the second angle being different from the first angle.

The first angle of the at least a first sheet guide element is different from the second angle of the second sheet guide element. The first angle may be larger than the second angle, the first angle may also be smaller than the second angle. The first angle and second angle may be selected differently based on the width of respective first or second of the plurality of sheet guide elements and may be selected based on the length of the corona electrode near the respective first or second one of the plurality of sheet guide elements. The first angle and second angle may also be selected based on position of the sheet guide element. For example in a certain position where a side edge of the cut sheet will move along the corona means, the angle of the sheet guide element may be adjusted in order to improve the guidance of the side edge of the cut sheet material.

In an embodiment, the first angle is in opposite direction of the second angle with respect to the sheet transport direction. For example, the first angle may be clockwise with respect to the sheet transport direction and the second angle may be counterclockwise with respect to the sheet transport direction. The first angle and second angle may have the same absolute value, but alternatively may also have a different absolute value. In a particular embodiment, the first angle and the second angle may be directed away with respect to each of the nearest side edges of a transported sheet in the transport direction of the sheet. This arrangement provides that the leading edge of the cut sheet contacts a sheet guide element prior to a contact between the sheet guide element and the corner of the cut sheet. This provides the advantage that the guiding of cut sheet material having curl behavior is improved.

In a further embodiment the first one and the second one of the plurality of sheet guide elements are arranged opposite of each other with respect to the middle of a transported sheet in the transport direction of the sheet. This provides the advantage that a set of cut sheet materials having a variation in width can easily be guided along the corona means without sheet transport disturbances caused by the corners or side edges of the sheet.

In an embodiment of the corona treatment device, the plurality of sheet guide elements comprises a third sheet guide element being arranged in parallel to the first sheet guide element or the second sheet guide element.

This provides the advantage that the distance between two (e.g. neighboring) sheet guide elements is substantially constant along the transport direction of the sheet. As a result the uniformity of the surface treatment of the sheet may easily be controlled. In an embodiment a subset of the plurality of sheet guide elements is arranged in parallel to each other.

In an embodiment of the corona treatment device, wherein at least one of the plurality of sheet guide elements is supported by at least one supporting element, which at least one supporting element is arranged substantially parallel to the corona electrode. The supporting element provides a relatively high stiffness to the sheet guide elements in the direction perpendicular to the length.

In another embodiment the corona means comprises a plurality of corona electrodes. This provides a relatively simple grid construction. The grid construction provide a relatively short length between each supporting position of the plurality of sheet guide elements, thereby providing a relatively high stiffness to the sheet guide elements in the direction perpendicular to the length. As a result the predetermined distance between the corona electrode and the transport path is accurately maintained, for example also during contact with the cut sheet material during transport along the sheet guide elements. The at least one supporting element supporting the plurality of sheet guide elements may be arranged close to the corona electrodes and may be directly connected to the corona electrodes.

In an embodiment of the corona treatment device, wherein at least one of the plurality of sheet guide elements is supported by the corona electrode, being the supporting element.

Alternatively the corona means comprises a plurality of corona electrodes and wherein the plurality of sheet guide elements is supported by the plurality of corona electrodes. The sheet guide elements may be supported by the lower surface of the plurality of corona electrodes, the surface being closest to the transport path, may be supported by a left or right side of the plurality of corona electrodes or may be supported by the upper side of the plurality of corona electrodes. In a particular embodiment each of the sheet guide elements may be supported by a corona electrode by means of a bridge element, such as a hollow beam element, which bridge element at least partially encloses the corona electrode. The support enables that the sheet guide element has a relatively short length between each supporting point, thereby attaining a relatively high stiffness in the direction perpendicular to the length of the sheet guide element. As a result the predetermined distance between the corona electrodes and the transport path is accurately maintained, for example also during contact with the cut sheet material during transport along the sheet guide elements.

In an embodiment of the corona treatment device, at least one of the sheet guide element is constituted by a wire, whereby the wire comprises a perfluoroalkylene polymer such as Teflon material. In particular the wire may comprise a surface coating which comprises a perfluoroalkylene polymer, such as Teflon material. These wires can easily be arranged between the corona means and the transport path and the position of these wires can be maintained by pulling the wires at both ends. The wires comprising a Teflon material are resistant against a corona plasma treatment, thereby providing durability. A wire comprising a surface coating comprising a Teflon material can be obtained easily. Alternatively any other materials which are corona resistant may be applied.

In an embodiment the wire comprises a high density and/or high molecular weight polymer, such as HDPE and alike, in order to provide strength. Alternatively a wire comprising an aromatic polyamide material such as Kevlar may be used for providing strength. These wires can endure stretching forces easily for a long time.

In an embodiment of the corona treatment device, the sheet transporting means further comprises a supporting surface for supporting the sheet in operation during the transport of the sheet along the corona electrode, the supporting surface being arranged in between the transport path and the counter electrode. This enables a simple enclosing and directing of the sheet through the transport path during the transport of the sheet along the corona electrode.

In an embodiment of the corona treatment device, wherein the sheet transporting means further comprises a sheet input pinch roller. The sheet input pinch roller provides a controlled input of the cut sheet into the transport path along the corona means.

In an embodiment of the corona treatment device, wherein the sheet transporting means further comprises a pressing foot for pressing a portion of the sheet onto the sheet supporting surface, the pressing foot being positioned downstream from the sheet input pinch roller with respect to the sheet transport direction. This pressing foot presses a portion of the sheet onto the sheet supporting surface and thereby provides stiffness to the sheet in the direction perpendicular to the sheet transport direction. This enables an improved control over the transport direction of the sheet along the corona unit, for example in case an airflow is provided inside the transport path. An airflow may be provided inside the transport path in order to cool the corona device and / or to remove ozone gasses from the corona device.

In a further embodiment of the corona treatment device, the pressing foot is fixed to the sheet input pinch roller.

In an embodiment of the corona treatment device, wherein the sheet guide element is a portion of the pressing foot of the sheet transporting means. Preferably the pressing foot is fixed to the sheet input pinch roller. In this embodiment the sheet guide element may be easily arranged and supported for partly extending over the corona plasma treatment length of the corona means. Preferably said portion of the pressing foot extends over at most 20% of the corona plasma treatment length $L_{corona}$ in the transport direction x.

In an embodiment of the corona treatment device, wherein an electrical insulating layer is arranged in between the transport path and the counter electrode. The arrangement of the counter electrode and electrical insulating layer provides that a corona discharging treatment process directing from the corona electrode to the counter electrode attains a certain discharging plasma treatment widening, thereby improving the quality of the surface treatment of a sheet. The dielectric property and thickness of the electrical insulating layer may be suitably selected in order to adapt the corona plasma treatment width.

In an embodiment of the corona treatment device, wherein the counter electrode is a cylindrical electrode being rotatable around its axial axis, wherein optionally the counter electrode comprises the electrical insulating layer at the outer surface of the counter electrode.

In another aspect of the invention a printing system is provided for processing a cut sheet material, the printing system comprising the corona treatment device according to invention for treating a surface of the cut sheet material, at least one marking station for applying a marking material on the cut sheet material, a cut sheet feeding station and a cut sheet delivery station.

Therefore the present invention pertains to:

1. A corona treatment device for treating a cut sheet material, the corona treatment device comprising:

- a corona means for applying a corona plasma treatment on a surface of a sheet, the corona means comprising a corona electrode and a counter electrode,
- a sheet transporting means for transporting the cut sheet material in the direction of a transport path , the transport path of the cut sheet material being positioned through the corona means and in between the corona electrode and the counter electrode, and
- a plurality of sheet guide elements for guiding the sheet along the corona electrode, the plurality of sheet guide elements being positioned between the corona electrode and the transport path thereby providing a predetermined distance between the transport path and the corona electrode.

2. The corona plasma treatment device, wherein the predetermined distance is in the range of 1 mm to 3 mm.

3. The corona plasma treatment device, wherein each of the plurality of sheet guide elements comprises a ceramic material.

4. The corona treatment device, wherein the plurality of sheet guide elements comprising at least a first sheet guide element extending in a direction at a first angle in a plane of the transport path with respect to the sheet transport direction, and wherein the angle of the sheet guide element together with a width of the sheet guide element $W_{guid}$ defines which part of a corona plasma treatment length of the corona means $L_{corona}$ in the sheet transport direction is covered by the sheet guide element and wherein at most 20% of the corona plasma treatment length of the corona means $L_{corona}$ is covered.

5. The corona treatment device, wherein the width of the sheet guide element $W_{guid}$ is in the range 0.3 mm to 1 mm and the corona plasma treatment length of the corona means is at least 10 mm.

6. The corona treatment device, wherein the plurality of sheet guide elements comprises a second sheet guide element extending in a direction at a second angle with respect to the sheet transport direction, the second angle being different from the first angle.

7. The corona treatment device, wherein the second angle is in opposite direction of the first angle with respect to the sheet transport direction.

8. The corona treatment device, wherein the plurality of sheet guide elements comprises a third sheet guide element being arranged in parallel to the first sheet guide element or the second sheet guide element.

9. The corona treatment device, wherein at least one of the plurality of sheet guide elements is supported by at least one supporting element, which at least one supporting element is arranged substantially parallel to the corona electrode, in particular at least one of the plurality of sheet guide elements is supported by the corona electrode, being the supporting element.

10. The corona treatment device, wherein at least one of the sheet guide elements is constituted by a wire, whereby the wire comprises a perfluoroalkylene polymer, in particular the wire comprises a surface coating comprising a perfluoroalkylene polymer.

11. The corona treatment device, wherein the sheet transporting means further comprises a sheet supporting surface for supporting the sheet during the transport of the sheet along the corona electrode, the supporting surface being arranged in between the transport path and the counter electrode.

12. The corona treatment device, wherein the sheet transporting means further comprises a sheet input pinch roller, wherein the sheet transporting means further comprises a pressing foot for pressing a portion of the sheet onto the sheet supporting surface, the pressing foot being positioned downstream from the sheet input pinch roller with respect to the sheet transport direction.

13. The corona treatment device, wherein the sheet guide element is a portion of the pressing foot of the sheet transporting means.

14. The corona treatment device, wherein an electrical insulating layer is arranged in between the transport path and the counter electrode.

15. The corona treatment device, wherein the counter electrode is a cylindrical electrode being rotatable around its axial axis, wherein optionally the counter electrode comprises the electrical insulating layer at the outer surface of the counter electrode.

16. A printing system for processing a cut sheet material, the printing system comprising the corona treatment device for treating a surface of the cut sheet material, at least one marking station for applying a marking material on the cut sheet material, a cut sheet feeding station and a cut sheet delivery station.

Further scope of applicability of the present invention will become apparent from the detailed description given hereinafter. However, it should be understood that the detailed description and specific examples, while indicating embodiments of the invention, are given by way of illustration only, since various changes and modifications within the scope of the invention will become apparent to those skilled in the art from this detailed description.

## BRIEF DESCRIPTION OF THE DRAWINGS

The present invention will become more fully understood from the detailed description given hereinbelow and the accompanying schematical drawings which are given by way of illustration only, and thus are not limitative of the present invention, and wherein:

Fig. 1 schematically shows a cut sheet image forming system, wherein printing is achieved using a inkjet printing system.
Fig. 2A shows a side view of a corona treatment device according to an embodiment of the present invention.
Fig. 2B shows a bottom view of the corona treatment device of the embodiment shown in Fig. 2A along the line II-II.
Fig. 3 shows schematically an enlarged bottom view of an angle of a guide element of a corona treatment device according to the present invention.
Fig. 4 shows a bottom view of another embodiment of the corona treatment device.
Fig. 5A shows a side view of a corona treatment device according to an embodiment of the present invention.
Fig. 5B shows a bottom view of the corona treatment device of the embodiment shown in Fig. 5A along the line II-II.
Fig. 6A shows a side view of a corona treatment device according to an embodiment of the present invention.
Fig. 6B shows a bottom view of the corona treatment device of the embodiment shown in Fig. 6A along the line II-II.
Fig. 7 shows a side view of a sheet transporting means comprising a pressing foot for pressing a portion of the sheet onto a sheet supporting surface according to an embodiment of the invention.
Fig. 8A shows an enlarged side view of the construction of a sheet guide element according to an embodiment of the present invention.
Fig. 8B shows a side view of the construction a corona treatment device according to an embodiment of the present invention.
Fig. 8C shows a partial bottom view of the construction of the corona treatment device of the embodiment shown in Fig. 8B along the line II-II.
Fig. 9A shows a side view of the construction a corona treatment device according to an embodiment of the present invention.
Fig. 9B shows a bottom view of the corona treatment device of the embodiment shown in Fig. 9A along the line III-III.

## DETAILED DESCRIPTION OF EMBODIMENTS

The present invention will now be described with reference to the accompanying drawings, wherein the same reference numerals have been used to identify the same or similar elements throughout the several views.

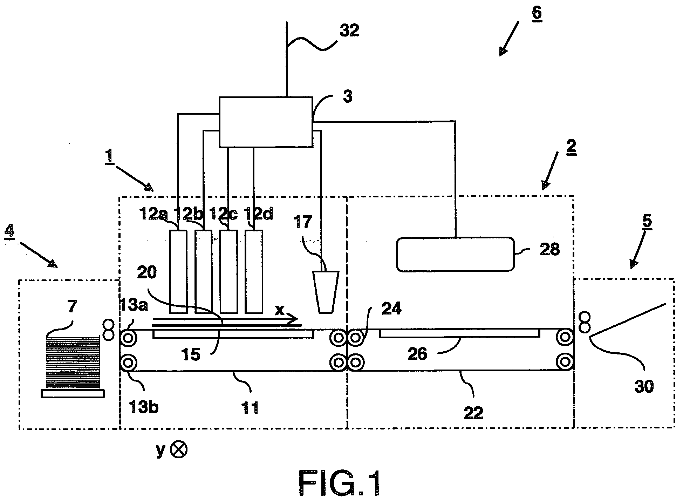

In Figure 1 an inkjet printing system (6) is shown. The inkjet printing system (6) comprises an inkjet marking module (1), an inkjet print drying module (2) and a data controller (3). The controller is connected to a network through a network cable (32). The print data enters the controller through the network and is further processed. The print data can be saved on a non-volatile memory like a hard disk and sent to the inkjet marking module (1) using an interface board.

A cut sheet supply module (4) supplies a receiving medium (20) to the inkjet marking module (1). In the cut sheet supply module (4) the receiving medium is separated from a pile (7) and brought in contact with the belt (11) of the inkjet marking module (1).

The inkjet marking module (1) comprises an assembly of four colour inkjet printheads (12a, 12b, 12c, 12d). The belt (11) transports the receiving medium to the area beneath the four colour inkjet printheads (12a, 12b, 12c, 12d). The colours provided by the inkjet printheads (12a, 12b, 12c, 12d) is black, cyan, magenta and yellow. When receiving the print data, the inkjet printheads (12a, 12b, 12c, 12d) each generate droplets of inkjet marking material and position these droplets on the receiving medium (20).

The belt (11) is transported by an assembly of belt rollers (13a, 13b). The belt (11) is transported by one roller belt roller (13a) in the direction of x, and the position of the belt (11) in the direction y is steered by means of another belt roller (13b). The belt (11) comprises holes and the receiving medium (20) is held in close contact with said belt (11) by means of an air suction device (15).

After the inkjet marking material has been printed on the receiving medium, the receiving medium is moved to an area beneath a scanner module (17). The scanner module (17) determines the position of each of the four colour images on the receiving medium (20) and sends this data to the data controller (3).

The receiving medium is transported to the inkjet print drying module (2). The inkjet print drying module (2) comprises belt (22), which is transported by an assembly of belt rollers (24). The receiving medium (20) is dried on the belt by means of a heating plate (26), thereby evaporating the liquid of the inkjet marking material. The evaporated liquid is condensed in the condenser (28). The dried print product is made available on a tray (30) in the print storage module (5).

The present invention may also be used in alternative printing systems or cut sheet processing systems.

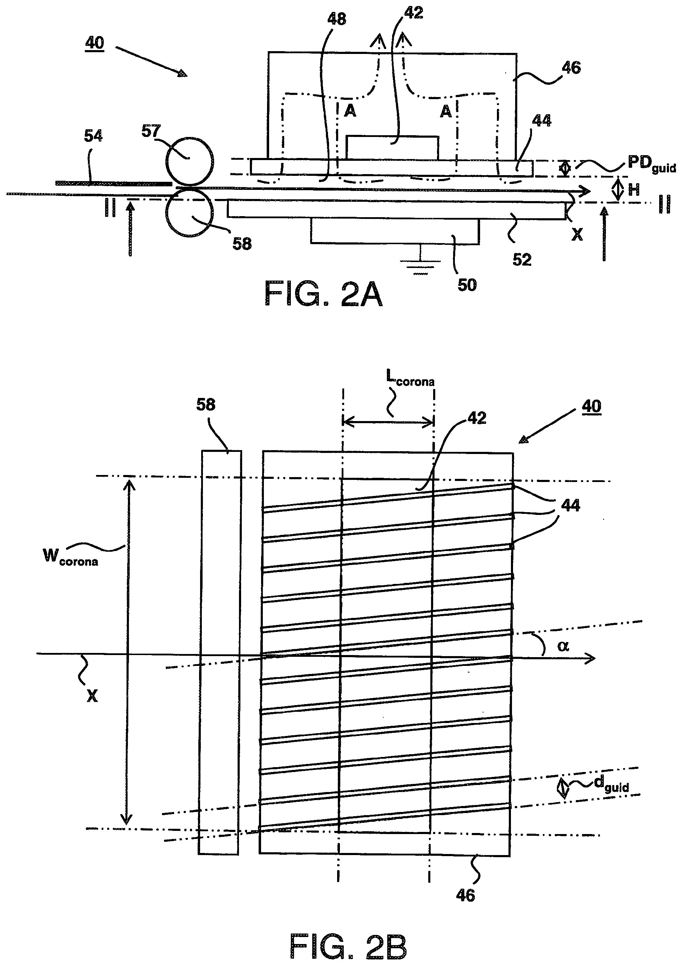

Fig. 2A shows the side view of the corona treatment device according to an embodiment of the present invention. A cut sheet material 54 is transported by sheet transporting means through a transport path 48 in the direction indicated by arrow X along a corona unit 40. The transport path 48 has a height H, which is sufficient to accommodate the thickness of the transported cut sheet material. Note that the transport path height H in Fig. 2A is shown schematically and is typically in the range of 1 to 3 mm. The sheet transport means comprises a driving roller 58 and a free rotatable roller 57, which together form a transport pinch. The corona unit 40 comprises a body 46, a corona means comprising one corona electrode 42, and a plurality of sheet guide elements 44 (see Fig. 2B). The plurality of sheet guide elements 44 is positioned between the corona electrode 42 and the transport path 48. Each of the plurality of sheet guide elements 44 provides a predetermined distance $PD_{guid}$ between the transport path 48 and the corona electrode 42. The predetermined distance $PD_{guid}$ in Fig. 2A is shown schematically and is typically in the range of about 1.5 mm. The sheet guide element 44 may be constituted of a ceramic material, such as aluminium oxide ($Al_2O_3$), silicon nitride ($Si_3N_4$) or silicon carbide (SiC). The corona unit further comprises a counter electrode 50. The counter electrode 50 is electrically grounded. Further the sheet transporting means comprises a sheet supporting surface 52 for supporting the sheet 54 during transport in the direction of the sheet transport path 48 along the corona electrode 42.

An air flow indicated by arrows A is provided inside of the corona unit 40. The air flow removes air contaminations, which is generated between the corona electrode 42 and the counter electrode 50, and directs the contaminations towards an air pump device (not shown). The air pump device further contains a filter in order to remove the air contaminations, such as ozone, from the air flow.

In another embodiment the sheet supporting surface 52 comprises an electrical insulating layer, for example a ceramic layer, such as a glass layer, or a polymeric layer. The electrical insulating layer arranged in between the counter electrode 50 and the transport path 48 provides that the surface treatment of the cut sheet material 54 during the corona discharge process of the corona means 42 towards the surface of the cut sheet material attains a certain treatment widening. This improves the uniformity and quality of the surface treatment of the cut sheet material 54.

Fig. 2B shows a bottom view of the corona treatment device of the embodiment shown in Fig. 2A along the line II-II. The corona electrode 42 has a certain width $W_{corona}$ and length $L_{corona}$ over which a corona plasma treatment is applied. The corona plasma treatment length of the corona electrode in this embodiment is the same as the dimension of the corona electrode $L_{corona}$ in the direction of the sheet transport X.

The cut sheet material is guided by the sheet guide elements 44 along the corona unit 40 in the direction indicated by arrow X. Each of the plurality of sheet guide elements 44 extend in a direction, the extending direction being arranged at an angle indicated by $\alpha$ with respect to the sheet transport direction X. A sheet guide element prohibits or reduces a surface treatment of the cut sheet material in the area where the sheet guide element covers the corona electrode 42. The distance between each of the plurality of guide elements is $d_{guid}$. In an embodiment the distance $d_{guid}$ is such that a portion of the surface of the cut sheet at most contacts one of the plurality of the guide elements 44 when moving in the direction X along the corona unit 40 over the treatment length $L_{corona}$ of the corona electrode 42.

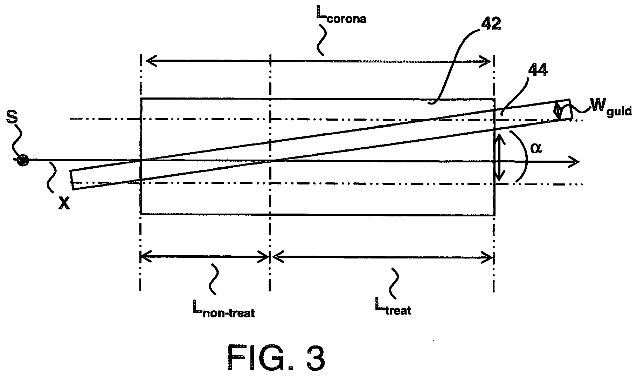

Fig. 3 shows schematically an enlarged bottom view of an angle of a sheet guide element of a corona treatment device according to the present invention. The sheet guide element 44 has a certain width $W_{guid}$ and is arranged at the angle indicated by $\alpha$ with respect to the sheet transport direction X. The corona electrode 42 has a treatment length $L_{corona}$ over which a corona plasma treatment can be provided to a certain portion of a surface of a cut sheet material.

When a portion of a surface of a cut sheet material indicated by point S follows the trajectory of arrow X, that portion of the surface will not receive a corona treated along the length $L_{non-treat}$ as the sheet guide element 44 covers the corona electrode 42 in this area, and will receive a corona treated along the length $L_{treat}$ as no sheet guide element is present in this area. The angle $\alpha$ is selected such that at most 20%, of the treatment length of the corona is covered by the sheet guide element 44. In case the width $W_{guid}$ of the sheet guide element 44 increases, or the treatment length $L_{corona}$ of the corona electrode 42 decreases, the angle $\alpha$ may be increased to ensure a sufficient surface treatment. The relation of a lower limit of the angle $\alpha$(minimum) with the width $W_{guid}$ of the sheet guide element 44 and the treatment length $L_{corona}$ of the corona electrode 42 is given by the function:

$$\sin \alpha(minimum) = (W_{guid} / L_{non-treat}) = (W_{guid} / 0{,}2 \times L_{corona})$$

The angle $\alpha$ is selected such that it is at least $\alpha$(minimum) or higher.

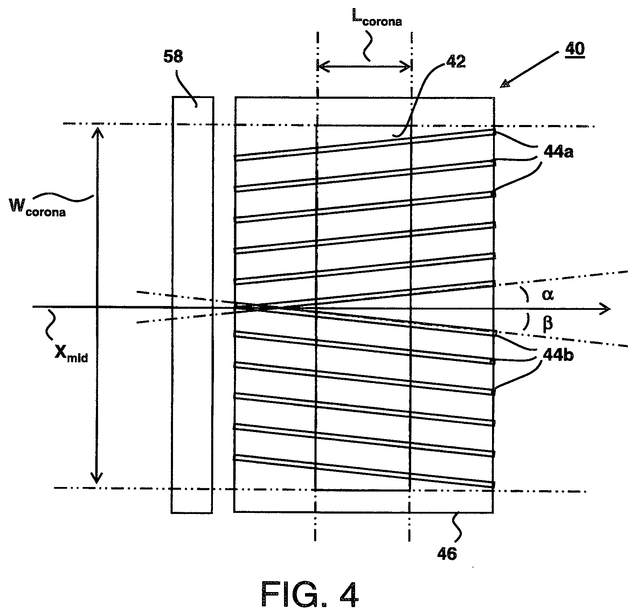

Fig. 4 shows a bottom view of another embodiment of the corona treatment device. The cut sheet material is guided by the subset of the plurality of sheet guide elements 44a and the subset of the plurality of sheet guide elements 44b along the corona unit 40 in the direction indicated by arrow X. The subset of the plurality of guide elements 44a at one side of the line indicated by arrow $X_{mid}$ is arranged at an angle indicated by $\alpha$ with respect to the sheet transport direction X. The subset of the plurality of guide elements 44b at the other side of the line indicated by arrow $X_{mid}$ is arranged at an angle indicated by $\beta$ with respect to the sheet transport direction X. A cut sheet is transported along the direction X. A cut sheet may be transported such that the side edges of the cut sheet move at the opposite of the line indicated by arrow $X_{mid}$. As a result the two side edges of the cut sheet are both guided without disturbing the cut sheet transport.

In a particular embodiment the middle portion of the surface each cut sheet is moved at the line indicated by arrow $X_{mid}$. As a result the two side edges of a cut sheet material are located at either sides of the arrow $X_{mid}$ independently of the width of the cut sheet material. The subsets of plurality of guide elements 44a and 44b are arranged at both sides of the line $X_{mid}$ such that each of the plurality of guide elements is directed away from the respective side edge of a transported sheet in the direction of the sheet. As a result a cut sheet material having any width can easily be guided along the corona electrode 42 without sheet transport disturbances caused by the corners or side edges of the sheet.

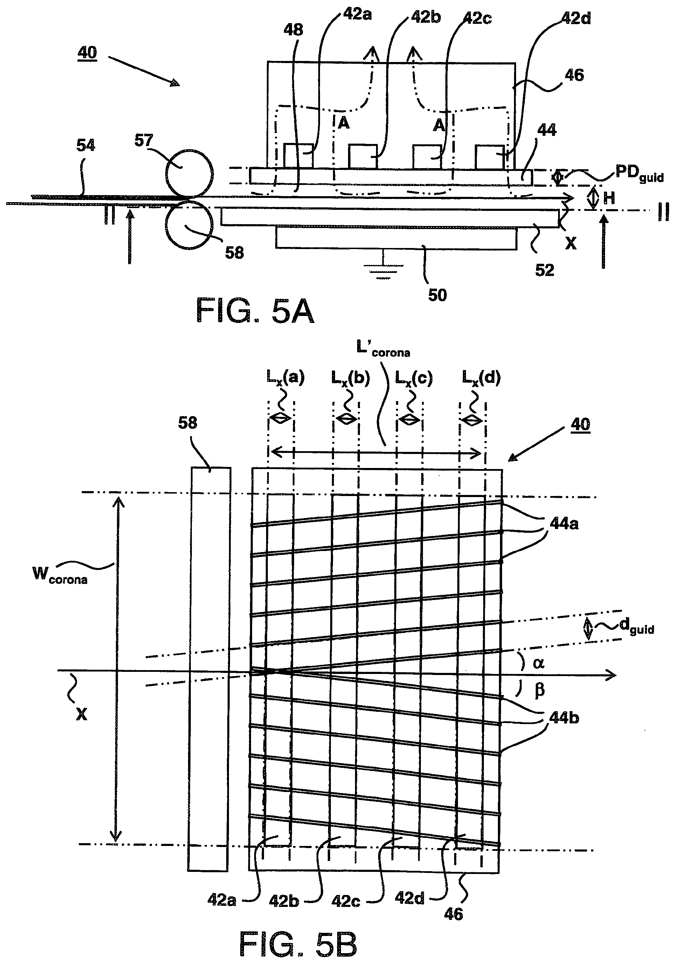

Fig. 5A shows a side view of a corona treatment device according to an embodiment of the present invention. The corona unit 40 comprises four corona electrodes 42a, 42b, 42c, 42d which are arranged at a distance relative to each other along the sheet transport path 48. The corona electrodes 42a, 42b, 42c, 42d are arranged such that the air flow represented by arrows indicated with A can easily flow inside of the corona unit 40. The air flow removes air contaminations, which is generated between the plurality of corona electrodes 42a, 42b, 42c, 42d and the counter electrode 50, and directs the contaminations towards an air pump device (not shown).

Fig. 5B shows a bottom view of the corona treatment device of the embodiment shown in Fig. 5A along the line II-II. The cut sheet material is guided by the subset of the plurality of sheet guide elements 44a and the subset of the plurality of sheet guide elements 44b along the corona unit 40 in the direction indicated by arrow X. The subset of the plurality of guide elements 44a is arranged at an angle indicated by $\alpha$ with respect to the sheet transport direction X. The subset of the plurality of guide elements 44b is arranged at an angle indicated by $\beta$ with respect to the sheet transport direction X. The corona electrode 42a, 42b, 42c, 42d have a length $L_x(a)$, $L_x(b)$, $L_x(c)$, $L_x(d)$ over which it applies a corona plasma treatment to a portion of the surface of a cut sheet material. The treatment lengths of the corona electrodes 42a, 42b, 42c, 42d may be identical and may be different to each other. The plurality of corona electrodes 42a, 42b, 42c, 42d is arranged over a length $L'_{corona}$ in the direction of the sheet transport direction X. The total corona plasma treatment length is the sum of the respective treatment lengths $L_x(a)$, $L_x(b)$, $L_x(c)$, $L_x(d)$ of each corona electrode 42a, 42b, 42c, 42d.

The distance $d_{guid}$ between neighboring sheet guide elements is such, that a portion of the surface of the cut sheet at most contacts one of the plurality of the guide elements 44 when moving in the direction X along the corona unit 40 over the length $L'_{corona}$ of the four corona electrodes 42a, 42b, 42c, 42d. The angle $\alpha$ and $\beta$ are selected such that at most 20%, of the sum of the lengths $L_x(a)$, $L_x(b)$, $L_x(c)$, $L_x(d)$ of the plurality of corona electrodes 42a, 42b, 42c, 42d is covered by the sheet guide element 44. In case the width $W_{guid}$ of the sheet guide element 44 increases, or the sum of the lengths $L_x(a)$, $L_x(b)$, $L_x(c)$, $L_x(d)$ of the plurality of corona electrodes 42a, 42b, 42c, 42d decreases, the angle $\alpha$ and $\beta$ may be increased to ensure a sufficient surface treatment.

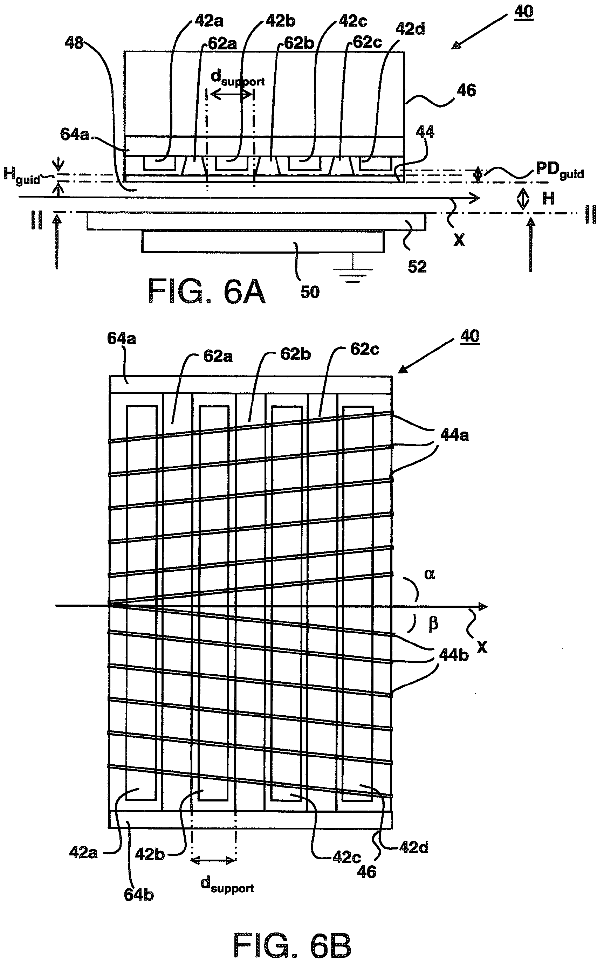

Fig. 6A shows a side view of a corona treatment device according to an embodiment of the present invention. The corona unit 40 comprises four corona electrodes 42a, 42b, 42c, 42d, a plurality of sheet guide elements 44 (shown in fig. 6B) and three supporting elements 62a, 62b and 62c. The supporting elements 62a, 62b, 62c are arranged substantially parallel to the corona electrodes 42a, 42b, 42c, 42d in between the four corona electrodes 42a, 42b, 42c, 42d. The supporting elements 62a, 62b, 62c are connected to the plurality of sheet guide elements 44. This provides a relatively simple and mechanically strong grid construction. The connection to the supporting elements 62a, 62b, 62c provide a relatively short length $d_{support}$ between each supporting position of the plurality of sheet guide elements 44, thereby providing a relatively high stiffness to the sheet guide elements 44 in the direction perpendicular to the length $d_{support}$. In this embodiment the sheet guide elements 44 have a height $H_{guid}$, which is adjusted to be smaller than the predetermined distance $PD_{guid}$ and are arranged at a certain distance from the corona electrodes 42a, 42b, 42c, 42d. This has the advantage that the sheet guide elements 44 are less exposed to the electrical field generated by the corona electrodes 42a, 42b, 42c, 42d. Since the sheet guide elements 44 are supported, the predetermined distance $PD_{guid}$ between the corona electrodes 42a, 42b, 42c, 42d and the transport path 48 is still accurately maintained, for example also during contact with the cut sheet material 54 during transport along the sheet guide elements 44. The at least one supporting element 62a, 62b, 62c are connected to each other by connecting elements 64a, 64b (shown in Fig. 6B). The connecting elements 64a, 64b are fixed to the body 46.

Fig. 6B shows a bottom view of the corona treatment device of the embodiment shown in Fig. 6A along the line II-II. The cut sheet material is guided by the subset of the plurality of sheet guide elements 44a and the subset of the plurality of sheet guide elements 44b along the corona unit 40 in the direction indicated by arrow X. The subset of the plurality of guide elements 44a is arranged at an angle indicated by $\alpha$ with respect to the sheet transport direction X. The subset of the plurality of guide elements 44b is arranged at an angle indicated by $\beta$ with respect to the sheet transport direction X.

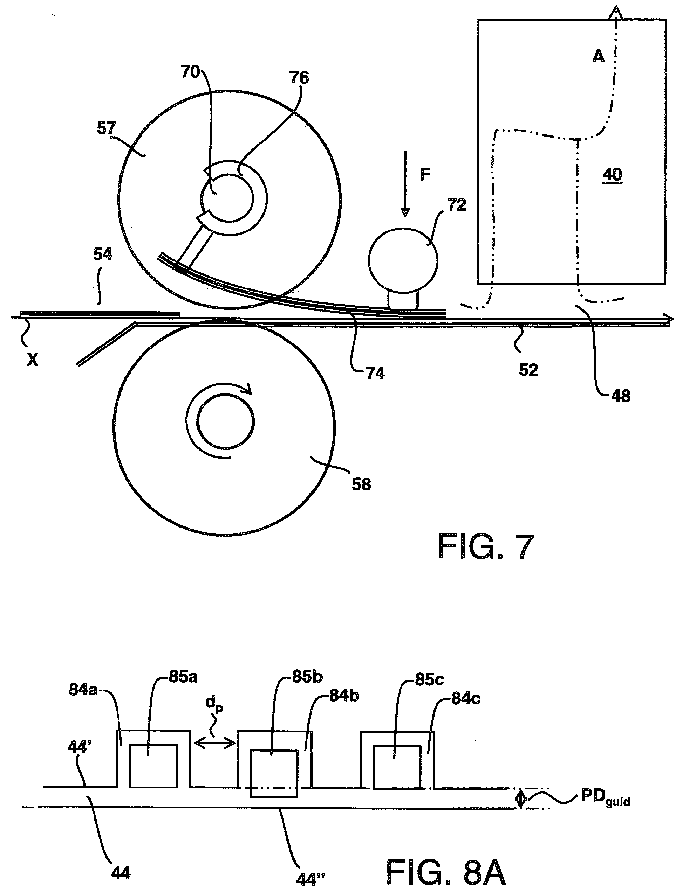

Fig. 7 shows a side view of a sheet transporting means comprising a pressing foot for pressing a portion of the sheet onto a sheet supporting surface according to an embodiment of the invention. A cut sheet material 54 is transported by a sheet transporting means in the direction of a sheet transport path 48 indicated by arrow X along a corona unit 40. The sheet transport means comprises a driving roller 58 and a free rotatable roller 57, which together form a transport pinch. A pressing foot 74 is fixed to the axis 70 of the free rotatable roller 57 by clamp 76. A weight 72 is provided on the downstream side of the pressing foot 74, thereby providing a pressure indicated by arrow F onto a sheet supporting surface 52 near the sheet transport path 48. An airflow represented by arrows A is provided inside the transport path in order to remove air contamination, such as ozone gasses, from the corona device 40. The pressing foot 74 provides stiffness to the sheet 54 in the direction perpendicular to the sheet transport direction X. This enables an improved control over the transport direction of the sheet 54 along the corona unit 40, even in case the airflow is provided inside the transport path 48.

Fig. 8A shows an enlarged side view of the construction of a sheet guide element according to an embodiment of the present invention. The sheet guide element 44 comprises three protrusions 84a, 84b and 84c. Each protrusion comprises a hole 85a, 85b, 85c. Each of the holes 85a, 85b, 85c may provide a space suitable to embrace a corona electrode 42 (not shown). In case the protrusion 84a, 84b and 84c is fixed at at least one side of the hole 85a, 85b, 85c to the corona electrode 42, the corona electrode 42 provides a support element for the sheet guide element 44. The sheet guide element 44 is constituted of a ceramic material, such as aluminium oxide ($Al_2O_3$), silicon nitride ($Si_3N_4$) or silicon carbide (SiC). In a particular embodiment, the corona electrode 42 has substantially the same height as the height of the hole 85a - 85e. The distance $d_p$ between two protrusions 84a, 84b may be adjusted in order to provide better mechanical properties to the sheet guide element 44. In an embodiment the distance $d_p$ may be 0, whereby the protrusions 84a, 84b may be elements of a single protrusion comprising the two holes 85a, 85b.

The holes 85a, 85b, 85c may be aligned with the upper side 44' of the extending sheet guide element (hole 85a, 85c) or may be offset with respect to the upper side 44' of the extending sheet guide element (hole 85b). The hole may be rectangular, but may also have any other shape. The predetermined distance $PD_{guid}$ between the corona electrode 42 and the paper transport path 48, i.e. the lower side 44" of the sheet guide element, is aligned with the upper side 44' in case the lower side of the corona electrode 42 is aligned with the upper side 44' of the sheet guide element 44. Alternatively the lower side of the corona electrode may be arranged offset from the upper side 44' of the sheet guide element 44, thereby adjusting the predetermined distance (not shown).

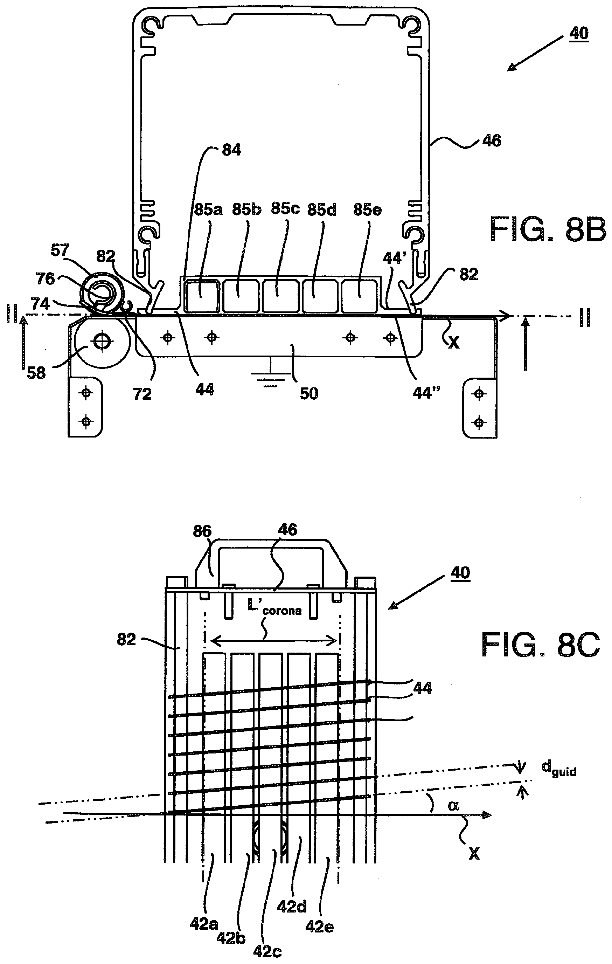

Fig. 8B shows a side view of the construction of a corona treatment device according to an embodiment of the present invention. A cut sheet material is transported by a sheet transporting means in the direction of a sheet transport path indicated by arrow X along a corona unit 40. The sheet transport means comprises a driving roller 58 and a free rotatable roller 57, which together form a transport pinch. A pressing foot 74 is fixed to the axis of the free rotatable roller 57 by clamp 76. A weight 72 is provided on the downstream side of the pressing foot, thereby providing a pressure onto a sheet supporting surface 50 near the sheet transport path. An airflow (not shown) is provided inside the transport path in order to remove air contamination, such as ozone gasses, from the corona device 40.

The corona unit 40 comprises a body 46, five corona electrodes 42a, 42b, 42c, 42d, 42e (shown in Fig. 8c), a plurality of sheet guide elements 44 (shown in Fig. 8C) each comprising a protrusion 84. The protrusion 84 comprises five holes 85a - 85e. Each of the five holes embraces a corona electrode 42a - 42e (shown in Fig. 8C). The body 46 comprises two body elements 82 for holding the plurality of sheet guide elements 44. The two body elements 82 extend in a direction parallel to the corona electrodes 42a - 42e and are both electrical insulating. The sheet guide elements 44 provide a predetermined distance $PD_{guid}$ (not shown) between the corona electrodes 42a - 42e and the transport path, which is typically in the range of about 1.5 mm. The sheet guide elements 44 is constituted of a ceramic material, such as aluminium oxide ($Al_2O_3$), silicon nitride ($Si_3N_4$) or silicon carbide (SiC).

The holes 85a - 85e are arranged offset from the upper side of the sheet guide element 44'. The parts of the sheet guide elements 44 between the holes 85a - 85e and the lower side of the sheet guide element 44" have a smaller height than the height of the other parts of the sheet guide elements 44. The sheet guide elements 44 are connected to each of the five corona electrodes 42 by way of at least one side of each of the holes 85a - 85e of the protrusion 84. Preferably each of the five corona electrodes 42 has the same height as the height of the corresponding holes 85a - 85e. The protrusion 84 together with the connection to the corona electrodes 42a - 42e provides a relatively high stiffness to the sheet guide elements 44 in the direction perpendicular to the length of the sheet guide element. As a result the predetermined distance between the corona electrodes 42a - 42e and the transport path is accurately maintained, for example also during contact with the cut sheet material during transport along the sheet guide elements 44. The sheet supporting surface 50 is a RVS plate, which is electrically grounded, and as such also serves as a counter electrode.

Fig. 8C shows a partial bottom view of the construction of the corona treatment device of the embodiment shown in Fig 8B along the line II-II. The body 46 comprises the two body elements 82 for holding the plurality of sheet guide elements 44. The body 46 further comprises at each end a handle 86 for handling the corona unit 40.

The cut sheet material is guided by the guide elements 44 along the corona unit 40 in the direction indicated by arrow X. Each of the plurality of guide elements 44 has a width $W_{guid}$ of about 1 mm and extend in a direction, the direction being arranged at an angle indicated by a with respect to the sheet transport direction X.

A sheet guide element prohibits or reduces a surface treatment of the cut sheet material in the area where the sheet guide element covers the corona electrodes 42a-42e. The corona plasma treatment length in this embodiment of each of the corona electrodes 42a-42e is 10 mm. The sum of the corona plasma treatment length $L_{corona}$ is 50 mm. The total length $L'_{corona}$ of the five corona electrodes 42a-42e being about 55 mm is determined by the sum of the corona plasma treatment length plus the distances between the five corona electrodes, and is in this embodiment not equal to the corona plasma treatment length $L_{corona}$.

The distance between each of the plurality of sheet guide elements $d_{guid}$ is 10 mm. The distance $d_{guid}$ between neighboring sheet guide elements is selected, such that a portion of the surface of the cut sheet at most contacts one of the plurality of the guide elements 44 when moving in the direction X along the corona unit 40 over the length $L'_{corona}$ of the five corona electrodes 42a-42e.

The angle $\alpha$ in this embodiment is selected in the range 6 to 10 degrees. The lower value of the angle corresponds to the width of the sheet guide element 44 and the treatment length of the corona $L_{corona}$. The upper value of the angle corresponds to the distance $d_{guid}$ between neighboring sheet guide elements 44 and the total length $L'_{corona}$ of the five corona electrodes 42a-42e.

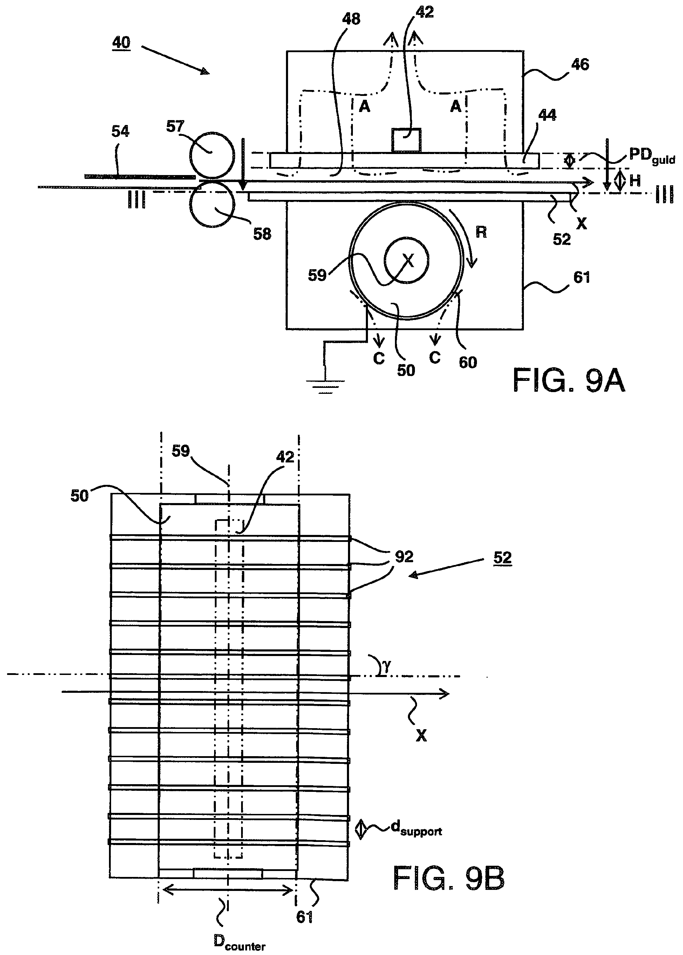

Fig. 9A shows a side view of the construction a corona treatment device according to an embodiment of the present invention. A counter electrode unit 61 is provided below the transport path 48 comprising a counter electrode 50. In this embodiment the counter electrode 50 is a cylindrical electrode being rotatable around axial axis 59 and comprising an electrical insulating layer 60 at the outer surface of the counter electrode 50. The counter electrode 50 is electrically grounded. The electrical insulating layer 60 provides that a corona discharging treatment process directing from the corona element 42 to the counter electrode 50 attains a certain discharging treatment widening, thereby improving the quality of the surface treatment of a sheet.

The counter electrode is rotated in the direction R around axial axis 59. Air is provided in the direction C in order to cool the surface of the counter electrode 50. A sheet supporting surface 52 is arranged in between the counter electrode 50 and the transport path 48 in order to support a cut sheet 54 during transport along the corona unit 40.

Fig. 9B shows a bottom view of the corona treatment device of the embodiment shown in Fig. 9A along the line III-III. The treatment length of the corona electrode 42 in this embodiment is 15 mm and the diameter $D_{counter}$ of the counter electrode 50 is 100 mm. The sheet supporting surface 52 comprises a plurality of sheet supporting elements 92. The sheet supporting elements 92 extend in a direction, having an angle $\gamma$ with respect to the sheet transport direction X. The angle $\gamma$ may be zero, as the sheet supporting elements 92 at the lower side of the transport path 48 do not prohibit a surface corona plasma treatment of the cut sheet by the corona electrode 42 at the upper side of the transport path 48. Alternatively the angle $\gamma$ may be selected larger than zero in order to provide a controlled guiding of the lower side of the cut sheet along the counter electrode 50. In an embodiment the sheet supporting elements may be constituted by wires, for example wires comprising a perfluoroalkylene polymer.

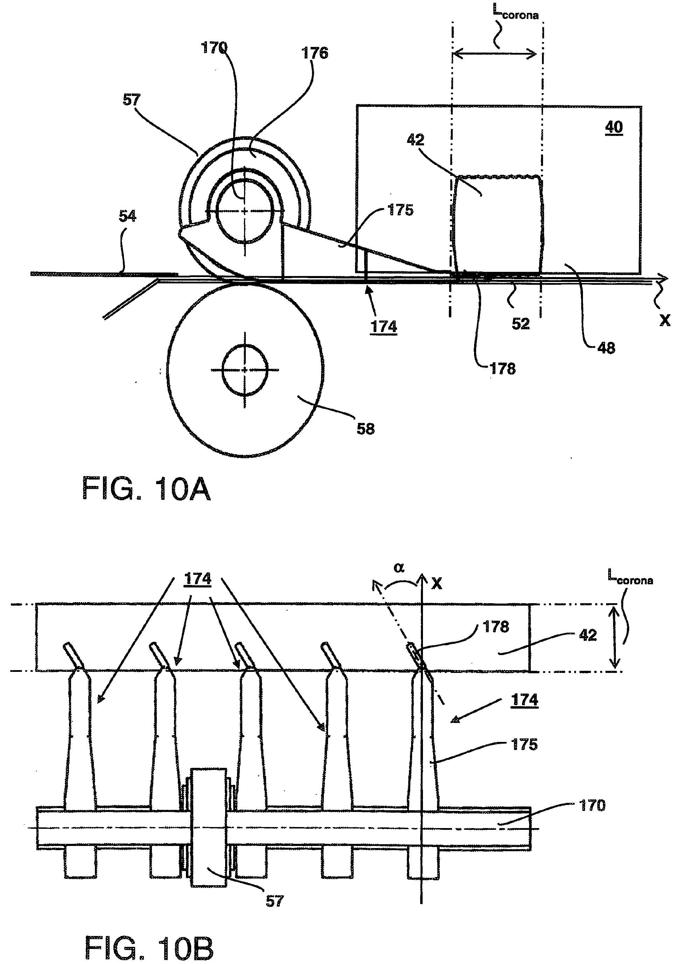

Fig. 10A and 10B show an embodiment of the present invention wherein the sheet guide element is a portion of a pressing foot of the sheet transporting means. Fig. 10A shows a side view of a sheet transporting means comprising the pressing foot 174 for pressing a portion of the sheet 54 onto a sheet supporting surface 52. The cut sheet material 54 is transported by a sheet transporting means in the direction of a sheet transport path 48 indicated by arrow X along a corona unit 40. The sheet transport means comprises a driving roller 58 and a free rotatable roller 57, which together form a transport pinch. The pressing foot 174 is fixed to the axis 170 of the free rotatable roller 57 by clamp 176. The pressing foot 174 comprises a first portion 175, which extends in the direction of the sheet transport path 48 up to the corona electrode 42 of the corona unit 40. The pressing foot 174 further comprises a second portion 178, which extends between the corona electrode 42 and the transport path 48 over at least a part of the corona plasma treatment length $L_{corona}$.

In Fig. 10B a bottom view is shown of the sheet transporting means and the pressing foot shown in Fig. 10A along the line II-II. A number of pressing foots 174 are shown. Each of the pressing foot 174 is connected to the axis 170 of the free rotatable roller 57. The first portion 175 of the pressing foot 174 extends in the transport direction x of the sheet transport path 48 up to the corona electrode 42 of the corona unit 40. The second portion 178 of the pressing foot 174 extends in a direction which is arranged at an angle $\alpha$ with respect to the transport direction x of the sheet transport path 48. The angle $\alpha$ is suitably selected such that the second portion 178 of the pressing foot only partially covers a corona plasma treatment length $L_{corona}$ of the corona electrode 42. Preferably the second portion 178 of the pressing foot covers at most 20% of the corona plasma treatment length $L_{corona}$ of the corona electrode 42 in the transport direction x. As a result the corona electrode 42 provides a corona plasma treatment of the cut sheet media over the width of the corona electrode 42 (i.e. perpendicular to the transport direction x) which is uniform and of high quality.

Detailed embodiments of the present invention are disclosed herein; however, it is to be understood that the disclosed embodiments are merely exemplary of the invention, which can be embodied in various forms. Therefore, specific structural and functional details disclosed herein are not to be interpreted as limiting, but merely as a basis for the claims and as a representative basis for teaching one skilled in the art to variously employ the present invention in virtually any appropriately detailed structure. In particular, features presented and described in separate dependent claims may be applied in combination and any advantageous combination of such claims are herewith disclosed.

Further, the terms and phrases used herein are not intended to be limiting; but rather, to provide an understandable description of the invention. The terms "a" or "an", as used herein, are defined as one or more than one. The term plurality, as used herein, is defined as two or more than two. The term another, as used herein, is defined as at least a second or more. The terms including and/or having, as used herein, are defined as comprising (i.e., open language). The term coupled, as used herein, is defined as connected, although not necessarily directly.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

**Claims**

1. A corona treatment device (40) for treating a cut sheet material (54), the corona treatment device comprising:

   - a corona means for applying a corona plasma treatment on a surface of a sheet (54), the corona means comprising a corona electrode (42, 42a - e) and a counter electrode (50) in close proximity of each other,
   - a sheet transporting means (57, 58) for transporting the sheet (54) in the direction of a transport path (48), the transport path of the cut sheet material being positioned through the corona means and in between the corona electrode and the counter electrode, and
   - a plurality of sheet guide elements (44) for guiding the sheet along the corona electrode (42, 42a - e), the plurality of sheet guide elements (44) being positioned between the corona electrode (42, 42a - e) and the transport path (48) thereby providing a predetermined distance ($PD_{guid}$) between the transport path and the corona electrode,

   wherein the plurality of sheet guide elements (44) comprises at least a first sheet guide element (44, 44a) extending in a direction at a first angle ($\alpha$) in a plane of the sheet transport direction with respect to the sheet transport direction (X), **characterized in that** the first angle ($\alpha$) in said plane of the sheet transport direction of the sheet guide element (44, 44a) together with a width of the sheet guide element $W_{guid}$ defines which part of a treatment length of the corona means $L_{corona}$ in the sheet transport direction (X) is covered by the sheet guide element (44, 44a) in said plane of the sheet transport direction (X) and wherein at most 20% of the treatment length of the corona means $L_{corona}$ is covered.

2. The corona treatment device according to claim 1, wherein the predetermined distance ($PD_{guid}$) is in the range of 1 mm to 3 mm.

3. The corona treatment device according to claim 1, wherein each of the plurality of sheet guide elements (44) comprises a ceramic material.

4. The corona treatment device according to claim 1, wherein the width of the sheet guide element $W_{guid}$ is in the range 0.3 mm to 1 mm and the treatment length of the corona means is at least 10 mm.

5. The corona treatment device according to any one of the preceding claims, wherein the plurality of sheet guide elements (44) comprises a second sheet guide element (44b) extending in a direction at a second angle ($\beta$) in said plane of the sheet transport direction (X) with respect to the sheet transport direction (X), the second angle being different from the first angle.

6. The corona treatment device according to claim 5, wherein the second angle ($\beta$) is in opposite direction of the first angle ($\alpha$) in said plane of the sheet transport direction with respect to the sheet transport direction (X).

7. The corona treatment device according to any one of the preceding claims, wherein at least one of the plurality of sheet guide elements (44) is supported by at least one supporting element (62a - c, 42a - c), which at least one supporting element (62a - c is arranged substantially parallel to the corona electrode (42a - c), in particular at least one of the plurality of sheet guide elements (44) is supported by the corona electrode (42a - c), being the supporting element.

8. The corona treatment device according to any one of the preceding claims, wherein at least one of the sheet guide elements (44) is constituted by a wire, whereby the wire comprises a perfluoroalkylene polymer, in particular the wire comprises a surface coating comprising a perfluoroalkylene polymer.

9. The corona treatment device according to any one of the preceding claims, wherein the sheet transporting means further comprises a sheet supporting surface (52) for supporting the sheet (54) during the transport of the sheet along the corona means (42, 50), the supporting surface (52) being arranged in between the transport path (48) and the counter electrode (50).

10. The corona treatment device according to claim 9, wherein the sheet transporting means further comprises a sheet input pinch roller (57), wherein the sheet transporting means further comprises a pressing foot (74, 174) for pressing a portion of the sheet (54) onto the sheet supporting surface (52), the pressing foot (74, 174) being positioned downstream from the sheet input pinch roller (57 with respect to the sheet transport direction (X).

11. The corona treatment device according to claim 10, wherein the sheet guide element (178) is a portion of the pressing foot (174) of the sheet transporting means.

12. The corona treatment device according to any one of the preceding claims, wherein the corona means further comprises an electrical insulating layer (52, 60) being arranged in between the transport path and the counter electrode.

13. The corona treatment device according to claim 1, wherein the counter electrode is a cylindrical electrode (50) being rotatable around its axial axis (59), wherein optionally the counter electrode comprises an electrical insulating layer (60) at the outer surface of the counter electrode.

14. A printing system for processing a cut sheet material, the printing system comprising the corona treatment device according to claim 1 - 13 for plasma treating a surface of the cut sheet material (54), at least one marking station (1) for applying a marking material on the cut sheet material, a cut sheet feeding station (4) and a cut sheet delivery station (5).

**Patentansprüche**

1. Koronabehandlungsvorrichtung (40) zur Behandlung eines geschnittenen Bogenmaterials (54), welche Koronabehandlungsvorrichtung aufweist:

   - eine Koronaeinrichtung zum Anwenden einer Korona-Plasmabehandlung auf eine Oberfläche eines Bogens (54), wobei die Koronaeinrichtung eine Koronaelektrode (42, 42a-e) und eine Gegenelektrode (50) aufweist, die in enger Nachbarschaft zueinander angeordnet sind,
   - eine Bogentransporteinrichtung (57, 58) zum Transportieren des Bogens (54) in Richtung eines Transportpfades (48), wobei der Transportpfad des geschnittenen Bogenmaterials durch die Koronaeinrichtung hindurch und zwischen der Koronaelektrode und der Gegenelektrode verläuft und

- mehrere Bogenführungselemente (44) zum Führen des Bogens entlang der Koronaelektrode (42, 42a-e), wobei die mehreren Bogenführungselemente (44) zwischen der Koronaelektrode (42,42a-e) und dem Transportpfad (48) angeordnet sind und dadurch einen vorbestimmten Abstand ($PD_{guid}$) zwischen dem Transportpfad und der Koronaelektrode schaffen,

wobei die mehreren Bogenführungselemente (44) wenigstens ein erstes Bogenführungselement (44, 44a) aufweisen, das sich in einer Richtung unter einem ersten Winkel ($\alpha$) in einer Ebene der Bogentransportrichtung in Bezug auf die Bogentransportrichtung (X) erstreckt,

**dadurch gekennzeichnet, dass** der erste Winkel ($\alpha$) in der Ebene der Bogentransportrichtung des Bogenführungselements (44, 44a) zusammen mit einer Breite des Bogenführungselements $W_{guid}$ definiert, welcher Teil einer Behandlungslänge der Koronaeinrichtung $L_{corona}$ in der Bogentransportrichtung (X) durch das Bogenführungselement (44, 44a) in der Ebene der Bogentransportrichtung (X) abgedeckt wird, und wobei höchstens 20% der Behandlungslänge der Koronaeinrichtung $L_{corona}$ abgedeckt werden.

2. Koronabehandlungsvorrichtung nach Anspruch 1, bei der der vorbestimmte Abstand ($PD_{guid}$) im Bereich von 1 mm bis 3 mm liegt.

3. Koronabehandlungsvorrichtung nach Anspruch 1, bei der jedes der mehreren Bogenführungselemente (44) ein keramisches Material aufweist.

4. Koronabehandlungsvorrichtung nach Anspruch 1, bei der die Breite des Bogenführungselements $W_{guid}$ im Bereich von 0,3 mm bis 1 mm liegt und die Behandlungslänge der Koronaeinrichtung wenigstens 10 mm beträgt.

5. Koronabehandlungsvorrichtung nach einem der vorstehenden Ansprüche, bei der die mehreren Bogenführungselemente (44) ein zweites Bogenführungselement (44b) aufweisen, das sich in einer Richtung unter einem zweiten Winkel ($\beta$) in der Ebene der Bogentransportrichtung (X) in Bezug auf die Bogentransportrichtung (X) erstreckt, wobei der zweite Winkel von dem ersten Winkel verschieden ist.

6. Koronabehandlungsvorrichtung nach Anspruch 5, bei der der zweite Winkel ($\beta$) dem ersten Winkel ($\alpha$) in der Ebene der Bogentransportrichtung in Bezug auf die Bogentransportrichtung (X) entgegen gerichtet ist.

7. Koronabehandlungsvorrichtung nach einem der vorstehenden Ansprüche, bei der wenigstens eines der mehreren Bogenführungselemente (44) durch wenigstens ein Tragelement (62a-c; 42a-c) gehalten ist, wobei das wenigstens eine Tragelement (62a-c) im wesentlichen parallel zu der Koronaelektrode (42a-c) angeordnet ist, wobei insbesondere wenigstens eines der mehreren Bogenführungselemente (44) durch die Koronaelektrode (42a-c) gehalten ist, die das Tragelement bildet.

8. Koronabehandlungsvorrichtung nach einem der vorstehenden Ansprüche, bei der wenigstens eines der Bogenführungselemente (44) durch einen Draht gebildet wird, wobei der Draht ein Perfluoralkylenpolymer aufweist, wobei der Draht insbesondere eine Oberflächebeschichtung aufweist, die ein Perfluoralkylenpolymer enthält.

9. Koronabehandlungsvorrichtung nach einem der vorstehenden Ansprüche, bei der die Bogentransporteinrichtung weiterhin eine Bogenabstützfläche (52) zur Abstützung des Bogens (54) während des Transport des Bogens entlang der Koronaeinrichtung (42, 50) aufweist, wobei die Abstützfläche (52) zwischen dem Transportpfad (48) und der Gegenelektrode (50) angeordnet ist.

10. Koronabehandlungsvorrichtung nach Anspruch 9, bei der die Bogentransporteinrichtung weiterhin eine Bogeneinzugsklemmrolle (57) aufweist, wobei die Bogentransporteinrichtung weiterhin ein Andruckfüßchen (74, 174) zum Andrücken eines Teils des Bogens (54) auf die Bogenabstützfläche (52) aufweist, wobei das Andruckfüßchen (74, 174) in Bezug auf die Bogentransportrichtung (X) stromabwärts der Bogeneinzugsklemmrolle (57) angeordnet ist.

11. Koronabehandlungsvorrichtung nach Anspruch 10, bei der das Bogenführungselement (178) ein Teil des Andruckfüßchens (174) der Bogentransporteinrichtung ist.

12. Koronabehandlungsvorrichtung nach einem der vorstehenden Ansprüche, bei der die Koronaeinrichtung weiterhin eine elektrische Isolationsschicht (52, 60) aufweist, die zwischen dem Transportpfad und der Gegenelektrode angeordnet ist.

**13.** Koronabehandlungsvorrichtung nach Anspruch 1, bei der die Gegenelektrode eine zylindrische Elektrode (50) ist, die um ihre axiale Achse (59) drehbar ist, wobei die Gegenelektrode wahlweise eine elektrisch isolierende Schicht (60) an der äußeren Oberfläche der Gegenelektrode aufweist.

**14.** Druckersystem zum Verarbeiten eines geschnittenen Bogenmaterials, wobei das Druckersystem die Koronabehandlungsvorrichtung nach Anspruch 1 bis 13 zur Plasmabehandlung einer Oberfläche des geschnittenen Bogenmaterials (54), wenigstens eine Markierungsstation (1) zum Anbringen eines Markierungsmaterials auf dem geschnittenen Bogenmaterial, eine Einzugsstation (4) für die geschnittenen Bögen, und eine Ausgabestation (5) für die geschnittenen Bögen aufweist.

**Revendications**

**1.** Dispositif de traitement par effet corona (40) pour traiter une matière en feuille découpée (54), le dispositif de traitement par effet corona comprenant :

- un moyen à effet corona pour appliquer un traitement au plasma par effet corona sur une surface d'une feuille (54), le moyen à effet corona comprenant une électrode à effet corona (42, 42a - e) et une contre-électrode (50) à proximité étroite l'une de l'autre,
- un moyen de transport de feuille (57, 58) pour transporter la feuille (54) dans le sens d'un chemin de transport (48), le chemin de transport de la matière en feuille découpée étant positionné à travers le moyen à effet corona et entre l'électrode à effet corona et la contre-électrode, et
- une pluralité d'éléments de guidage de feuille (44) pour guider la feuille le long de l'électrode à effet corona (42, 42a - e), la pluralité d'éléments de guidage de feuille (44) étant positionnée entre l'électrode à effet corona (42, 42a - e) et le chemin de transport (48) définissant de ce fait une distance prédéterminée ($PD_{guid}$) entre le chemin de transport et l'électrode à effet corona,

dans lequel la pluralité d'éléments de guidage de feuille (44) comprend au moins un premier élément de guidage de feuille (44, 44a) s'étendant dans un sens à un premier angle ($\alpha$) dans un plan du sens de transport de feuille par rapport au sens de transport de feuille (X), **caractérisé en ce que** le premier angle ($\alpha$) dans ledit plan du sens de transport de feuille de l'élément de guidage de feuille (44, 44a) en même temps qu'une largeur de l'élément de guidage de feuille $W_{guid}$ définit quelle partie d'une longueur de traitement du moyen à effet corona $L_{corona}$ dans le sens de transport de feuille (X) est couverte par l'élément de guidage de feuille (44, 44a) dans ledit plan du sens de transport de feuille (X) et dans lequel au plus 20 % de la longueur de traitement du moyen à effet corona $L_{corona}$ sont couverts.

**2.** Dispositif de traitement par effet corona selon la revendication 1, dans lequel la distance prédéterminée ($PD_{guid}$) est dans la plage de 1 mm à 3 mm.

**3.** Dispositif de traitement par effet corona selon la revendication 1, dans lequel chaque élément de la pluralité d'éléments de guidage de feuille (44) comprend une matière céramique.

**4.** Dispositif de traitement par effet corona selon la revendication 1, dans lequel la largeur de l'élément de guidage de feuille $W_{guid}$ est dans la plage de 0,3 mm à 1 mm et la longueur de traitement du moyen à effet corona est d'au moins 10 mm.

**5.** Dispositif de traitement par effet corona selon n'importe laquelle des revendications précédentes, dans lequel la pluralité d'éléments de guidage de feuille (44) comprend un second élément de guidage de feuille (44b) s'étendant dans un sens à un second angle ($\beta$) dans ledit plan du sens de transport de feuille (X) par rapport au sens de transport de feuille (X), le second angle étant différent du premier angle.

**6.** Dispositif de traitement par effet corona selon la revendication 5, dans lequel le second angle ($\beta$) est dans un sens opposé du premier angle ($\alpha$) dans ledit plan du sens de transport de feuille par rapport au sens de transport de feuille (X).

**7.** Dispositif de traitement par effet corona selon n'importe laquelle des revendications précédentes, dans lequel au moins un élément de la pluralité d'éléments de guidage de feuille (44) est supporté par au moins un élément de support (62a - c, 42a - c), lequel au moins un élément de support (62a - c) est agencé sensiblement parallèlement à l'électrode par effet corona (42a - c), en particulier au moins un élément de la pluralité d'éléments de guidage de feuille (44) est supporté par l'électrode à effet corona (42a - c), étant l'élément de support.

8.  Dispositif de traitement par effet corona selon n'importe laquelle des revendications précédentes, dans lequel au moins un des éléments de guidage de feuille (44) est constitué par un fil, de sorte que le fil comprend un polymère de perfluoroalkylène, en particulier le fil comprend un revêtement de surface comprenant un polymère de perfluoroalkylène.

9.  Dispositif de traitement par effet corona selon n'importe laquelle des revendications précédentes, dans lequel le moyen de transport de feuille comprend en outre une surface de support de feuille (52) pour supporter la feuille (54) pendant le transport de la feuille le long du moyen à effet corona (42, 50), la surface de support (52) étant agencée au milieu du chemin de transport (48) et de la contre-électrode (50).

10. Dispositif de traitement par effet corona selon la revendication 9, dans lequel le moyen de transport de feuille comprend en outre un rouleau de pincement d'entrée de feuille (57), dans lequel le moyen de transport de feuille comprend en outre un pied de pression (74, 174) pour presser une partie de la feuille (54) sur la surface de support de feuille (52), le pied de pression (74, 174) étant positionné en aval du rouleau de pincement d'entrée de feuille (57) par rapport au sens de transport de feuille (X).

11. Dispositif de traitement par effet corona selon la revendication 10, dans lequel l'élément de guidage de feuille (178) est une partie du pied de pression (174) du moyen de transport de feuille.

12. Dispositif de traitement par effet corona selon n'importe laquelle des revendications précédentes, dans lequel le moyen à effet corona comprend en outre une couche d'isolation électrique (52, 60) agencée au milieu du chemin de transport et de la contre-électrode.

13. Dispositif de traitement par effet corona selon la revendication 1, dans lequel la contre-électrode est une électrode cylindrique (50) rotative autour de son axe axial (59), dans lequel de manière facultative la contre-électrode comprend une couche d'isolation électrique (60) au niveau de la surface extérieure de la contre-électrode.

14. Système d'impression pour traiter une matière en feuille découpée, le système d'impression comprenant le dispositif de traitement par effet corona selon les revendications 1 à 13 pour le traitement au plasma d'une surface de la matière en feuille découpée (54), au moins une station de marquage (1) pour appliquer une matière de marquage sur la matière en feuille découpée, une station d'alimentation en feuille découpée (4) et une station de délivrance de feuille découpée (5).

FIG.1

**FIG. 2A**

**FIG. 2B**

FIG. 3

FIG. 4

FIG. 5A

FIG. 5B

**FIG. 6A**

**FIG. 6B**

FIG. 7

FIG. 8A

FIG. 8B

FIG. 8C

FIG. 9A

FIG. 9B

EP 2 802 455 B1

FIG. 10A

FIG. 10B

27

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040003475 A
- EP 0318284 A
- DE 10232255 A

- FR 2578176
- GB 925354 A